(19) Europäisches Patentamt
European Patent Office
Office européen des brevets

(11) EP 4 455 184 A1

(12) EUROPEAN PATENT APPLICATION

(43) Date of publication:
30.10.2024 Bulletin 2024/44

(21) Application number: 23382391.3

(22) Date of filing: 27.04.2023

(51) International Patent Classification (IPC):
*C08G 63/20* (2006.01) *C08G 63/60* (2006.01)
*C08G 63/685* (2006.01) *C08G 63/91* (2006.01)
*C09D 167/00* (2006.01) *C09D 167/02* (2006.01)

(52) Cooperative Patent Classification (CPC):
(C-Sets available)
**C08G 63/6854; C08G 63/127; C08G 63/60; C08G 63/914; C09D 167/00; C09D 167/02** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Arkema Quimica SAU**
**08470 Sant Celoni (Barcelona) (ES)**

(72) Inventors:
- **QUERA, César**
**08470 SANT CELONI (ES)**
- **SAN JUAN, Alexis**
**08470 SANT CELONI (ES)**
- **GRAU, Enrique**
**08470 SANT CELONI (ES)**

(74) Representative: **Arkema Patent**
**Arkema France**
**DRD-DPI**
**420, rue d'Estienne d'Orves**
**92705 Colombes Cedex (FR)**

# (54) BRANCHED POLYESTER COMPOSITION FOR POWDER COATINGS

(57) The present invention relates to a polyester composition comprising a branched carboxyl-functionalized polyester and a reduced amount of residual branching polyacid as well as its preparation process. The invention also relates to the use of the polyester composition of the invention in a coating composition, in particular a powder coating composition, having enhanced reactivity and/or reduced cure temperature.

EP 4 455 184 A1

(52) Cooperative Patent Classification (CPC): (Cont.)

C-Sets
**C09D 167/00, C08L 63/00;**
**C09D 167/00, C08L 63/06;**
**C09D 167/02, C08L 63/00;**
**C09D 167/02, C08L 63/06**

## Description

### TECHNICAL FIELD

The present invention relates to a polyester composition comprising a branched carboxyl-functionalized polyester and a reduced amount of residual branching polyacid as well as its preparation process. The invention also relates to the use of the polyester composition of the invention in a coating composition, in particular a powder coating composition, having enhanced reactivity and/or reduced cure temperature.

### TECHNICAL BACKGROUND

Many substrates require one or more layers of coating to provide an aesthetic aspect, enhanced surface properties and/or a protection from diverse factors such as corrosion, heat, wear, exposure to solvents, stains, UV's, etc.... Due to increasing concerns in environmental pollution, the coating industry is shifting towards volatile organic compounds (VOC) reduction or elimination.

Powder coatings, which are dry, finely divided, free flowing and solid materials at room temperature, have gained popularity in recent years over liquid coatings. Powder coatings are an environmentally promising technology since they do not contain any VOC and do not require exhaust treatment or wastewater treatment. This is a significant advantage over liquid paints in which organic solvent is volatilized into the atmosphere when the paint is cured by heating. In addition, excess powder coating material can be reclaimed and reused.

Generally, the usual method for producing a polyester resin for powder coatings comprises a first step of reacting a polyol, such neopentyl glycol, with a polyacid, such terephthalic acid or isophthalic acid, to obtain an initial hydroxyl-functionalized prepolymer. In further steps, this prepolymer is reacted with one or more polyacids in order to obtain a final carboxyl-functionalized polyester with the appropriate functionality, molecular weight and the right balance between acid value and hydroxyl value. The resin thus produced can be used as a binder in a coating composition in combination with an acid-reactive crosslinker such as an epoxy resin or a hydroxyalkylamide.

Despite their many advantages, powder coatings are generally cured at temperatures of at least 160°C, typically about 180°C. Below these recommended temperatures, the coatings have poor appearance, as well as poor physical and chemical properties.

Due to the elevated curing temperatures, powder coatings are generally not used to coat heat-sensitive substrates such as wood, in particular medium density fiber board (MDF), plastics and certain low melting metal alloys. Besides, when conventional powder coatings are used to coat heavy metal pieces, they require extremely long curing times in order to obtain a fully cured coating, which is very inconvenient from an energetic point of view.

It is therefore challenging to provide low-cure powder coatings (i.e., powder coatings that cure at a temperature lower than 160°C, preferably lower than 155°C, more preferably lower than 150°C, even more preferably lower than 145°C and most preferably lower than 140°C) that exhibit good chemical resistance, good mechanical and weathering properties whilst maintaining good appearance. Poor appearance is expected due to worse flow at reduced curing temperatures. Additionally, the Tg of the polyester resin, and the Tg of the resultant uncured powder coating composition formulated from it, must be high enough to ensure suitable storage stability.

One way of obtaining low-cure powder coatings is to increase the reactivity of the polyester resin so that the curing step can be conducted by heating the coating composition for shorter periods of time and/or at low temperatures.

High reactivity can be achieved by adding high amounts of curing catalyst, such as phosphonium salts or amine type catalyst. However, this is not useful when hydroxyalkylamide is used as a crosslinker.

Alternatively, high reactivity can be achieved by increasing the acid functionality of the polyester resin. In order to obtain polyesters with high acid value, an amount of branching polyacid such as trimellitic anhydride (TMA), can be added at the end of the synthesis process as described in US 4065438A, US 4147737A or EP 1054917. Such systems may be cured at very low temperatures in the range between 120-130°C. However, these systems comprise residual amounts of unreacted TMA which has recently been classified as a substance of very high concern (SVHC). There is thus a specific need to reduce free TMA content in these polyesters.

The use of trimellitic acid instead of TMA during the synthesis of the polyester is inefficient to avoid the presence of free TMA in the final product as trimellitic acid dehydrates to its anhydride form when heated as described in US 2971011A.

After extensive research, the Applicant has found that the use of an additive during the synthesis of the polyester can reduce or even suppress the residual TMA content in the polyester resin without affecting its reactivity. Said polyester resin can thus be used as a binder in a low-cure powder coating that exhibits good chemical resistance, good mechanical and weathering properties whilst maintaining good appearance.

## SUMMARY OF THE INVENTION

The present invention relates to a polyester composition obtained by reacting:

a) a hydroxyl-functionalized polyester component;
b) a branching polyacid component having an acid functionality of at least 3; and
c) an acid-reactive component.

Another object of the invention is the use of the polyester composition according to the invention, in a coating composition, preferably in a powder coating composition, more preferably in a crosslinkable powder coating composition.

Another object of the invention is a coating composition comprising:

- the polyester composition according to the invention;
- a crosslinker component;
- optionally a catalyst;
- optionally one or more additives.

Yet another object of the invention is a substrate fully or partially coated with the coating according to the invention.

Yet another object of the invention is a process for coating a substrate comprising the following steps:

- applying the coating composition according to the invention on at least part of a surface of a substrate; and
- curing the coating composition.

The present invention further relates to the use of an acid-reactive component to reduce the amount of residual branching polyacid component having an acid functionality of at least 3 in a carboxyl-functionalized polyester component obtained by reacting a hydroxyl-functionalized polyester component and a branching polyacid component having an acid functionality of at least 3.

## DETAILED DESCRIPTION OF THE INVENTION

### Polyester composition

The polyester composition of the invention is obtained by reacting three distinct components a), b) and c) as described below. Such components may be reacted in a single step or in successive steps, preferably in successive steps, as described below.

After reaction of components a), b) and c), the polyester composition may comprise a branched carboxyl-functionalized polyester, an additive component and optionally a residual amount of component b), wherein the additive component corresponds to the reaction product of at least part of component b) with component c).

#### Hydroxyl-functionalized polyester component

One of the components used to obtain the polyester composition of the invention is a hydroxyl-functionalized polyester component, also referred to as component a).

A hydroxyl-functionalized polyester component comprises or consists of at least one hydroxyl-functionalized polyester. A hydroxyl-functionalized polyester component may comprise or consist of a mixture of hydroxyl-functionalized polyesters.

A polyester is a polymer comprising a plurality of ester bonds. A polyester is generally based on a polyol component and a polyacid component. Accordingly, a polyester comprises moieties derived from the polymerization of a polyol component and a polyacid component.

A hydroxyl-functionalized polyester is a polyester bearing hydroxyl functional groups. In particular, component a) may have a hydroxyl number of from 10 to 115 mg KOH/g, preferably from 15 to 110 mg KOH/g, more preferably from 20 to 105 mg KOH/g.

A hydroxyl-functionalized polyester may further bear carboxylic acid functional groups. In particular, component a) may have an acid number of from 3 to 100 mg KOH/g, preferably from 4 to 80 mg KOH/g, more preferably from 5 to 60 mg KOH/g.

Component a) is based on a polyol component, also referred to as component a1).

A polyol component comprises or consists of at least one polyol. A polyol component may comprise or consist

of a mixture of polyols. As used herein, a polyol is a compound bearing at least two hydroxyl functional groups.

Component a1) comprises or consists of a diol component, also referred to as component a11), and optionally a branching polyol component, also referred to as component a12).

A diol component comprises or consists of at least one diol. A diol component may comprise or consist of a mixture of diols. As used herein, a diol is a compound bearing at least two hydroxyl functional groups. The hydroxyl functionality of the diol component is equal to 2.

In particular, component a11) may comprise or consist of at least one diol selected from the group consisting of an aliphatic diol, a cycloaliphatic diol, an aromatic diol, and combinations thereof.

Examples of suitable aliphatic diols include ethylene glycol, diethylene glycol, 1,2- or 1,3-propanediol, 1,2-, 1,3- or 1,4-butanediol, 1,5-pentanediol, 1,6-hexanediol, 1,10-decanediol, 1,12-dodecanediol, di-, or polyethylene glycol, di-, tri- or polypropylene glycol, neopentyl glycol, 2-butyl-2-ethyl-1,3-propanediol, 2-methyl-1,3-propanediol, 2-methyl-1,2-propanediol, 3-methyl-1,5-pentanediol, and combinations thereof.

Examples of suitable cycloaliphatic diols include 1,1-, 1,2-, 1,3- or 1,4-cyclohexanedimethanol, 1,2-, 1,3- or 1,4-cyclohexanediol, hydrogenated bisphenol A, isosorbide, isoidide, isomannide, and combinations thereof.

Examples of suitable aromatic diols include bisphenol A, an alkoxylated bisphenol A, bisphenol F, an alkoxylated bisphenol F and combinations thereof.

More particularly, component a11) may comprise or consist of at least one diol selected from the group consisting of neopentyl glycol, ethylene glycol, diethylene glycol, 1,2- or 1,3-propanediol, 1,2-, 1,3- or 1,4-butanediol, 1,5-pentanediol, 1,6-hexanediol, bisphenol A, hydrogenated bisphenol A, an alkoxylated bisphenol A and combinations thereof.

A branching polyol component comprises or consists of at least one branching polyol. A branching polyol component may comprise or consist of a mixture of branching polyols. As used herein, a branching polyol is a compound bearing at least three hydroxyl functional groups. Accordingly, the hydroxyl functionality of the branching polyol component is at least 3.

In particular, component a12) may comprise at least one branching polyol selected from trimethylolpropane, glycerol, tris(2-hydroxyethyl) isocyanurate, di(trimethylolpropane), pentaerythritol and combinations thereof.

In one embodiment, component a1) is substantially free of component a12).

In an alternative embodiment, component a1) comprises component a12) and the amount of component a12) is from 0.1 to 10%, in particular from 0.5 to 7%, more particularly from 1 to 5%, by weight based on the weight of component a1).

Component a1) may represent from 25 to 65%, in particular from 30 to 60%, more particularly from 35 to 45%, of the total weight of component a).

Component a) is further based on a polyacid component, also referred to as component a2).

A polyacid component comprises or consists of at least one polyacid. A polyacid component may comprise or consist of a mixture of polyacids. As used herein, a polyacid is a compound bearing at least two carboxylic acid functional groups or a derivative thereof (i.e. a compound bearing functional groups which can be hydrolyzed to generate at least two carboxylic acid functional groups in situ, such as cyclic anhydrides and di(C1-C6 alkyl) esters).

Component a2) comprises or consists of a diacid component, also referred to as component a21), and optionally a branching polyacid component, also referred to as component a22).

A diacid component comprises or consists of at least one diacid. A diacid component may comprise or consist of a mixture of diacids. As used herein, a diacid is a compound bearing exactly two carboxylic acid functional groups or a derivative thereof (i.e. a compound bearing functional groups which can be hydrolyzed to generate two carboxylic acid functional groups in situ, such as cyclic anhydrides and di(C1-C6 alkyl) esters). The acid functionality of the diacid component is equal to 2.

In particular, component a21) may comprise at least one diacid selected from the group consisting of an aromatic dicarboxylic acid, a saturated or unsaturated aliphatic dicarboxylic acid, a saturated or unsaturated cycloaliphatic dicarboxylic acid, derivatives thereof and combinations thereof.

Examples of suitable aromatic dicarboxylic acids and derivatives thereof include phthalic acid, terephthalic acid, isophthalic acid, bis(4-carboxyphenyl)methane, dimethyl phthalate, dimethyl terephthalate, dimethyl isophthalate, phthalic anhydride and combinations thereof.

Examples of suitable saturated aliphatic dicarboxylic acids and derivatives thereof include as adipic acid, dimethyl adipate, diethyl adipate, sebacic acid, dimethyl sebacate, diethyl sebacate, succinic acid, dimethyl succinate, diethyl succinate, succinic anhydride, 2-methylsuccinic acid, 2-ethylsuccinic acid, 2,2-dimethylsuccinic acid, pimelic acid, suberic acid, azelaic acid, 1,11-undecanedioic acid, 1,12-dodecanedioic acid, oxalic acid, dimethyl oxalate, diethyl oxalate, malonic acid, dimethyl malonate, diethyl malonate, 2-methylmalonic acid, 2-ethylmalonic acid, glutaric acid, dimethyl glutarate, diethyl glutarate, glutaric anhydride, 3,3-dimethylglutaric acid, 3,3-diethylglutaric acid, a C32-C36 fatty acid dimer and combinations thereof.

Examples of suitable unsaturated aliphatic dicarboxylic acids and derivatives thereof include itaconic acid, citraconic acid, mesaconic acid, glutaconic acid, muconic acid, fumaric acid, maleic acid, maleic anhydride and combinations thereof.

Examples of suitable saturated cycloaliphatic dicarboxylic acids and derivatives thereof include cyclopentane 1,2- or 1 ,3-dicarboxylic acid, cyclohexane 1,2-, 1,3- or 1,4-dicarboxylic acid, cyclohexane-1,2-dicarboxylic anhydride, cycloheptane 1,2-dicarboxylic acid, 1,2-, 1,3 or 1,4-bis(carboxymethyl)cyclohexane

Examples of suitable unsaturated cycloaliphatic dicarboxylic acids and derivatives thereof include tetrahydrophthalic acid, tetrahydrophthalic anhydride and combinations thereof.

More particularly, component a21) may comprise at least one diacid selected from the group consisting of terephthalic acid, isophthalic acid, adipic acid, derivatives thereof and combinations thereof.

In a preferred embodiment, component a21) comprises at least 60%, at least 70%, at least 80%, at least 90% or at least 95% by weight of terephthalic acid based on the weight of component a21). In a particularly preferred embodiment, component a21) comprises less than 20%, less than 15% or less than 10% by weight of isophthalic acid based on the weight of component a21).

A branching polyacid component comprises or consists of at least one branching polyacid. A branching polyacid component may comprise or consist of a mixture of branching polyacids. As used herein, a branching polyacid is a compound bearing at least three carboxylic acid functional groups or a derivative thereof. Accordingly, the acid functionality of the branching polyacid component is at least 3.

In particular, component a22) may comprise at least one branching polyacid selected from the group consisting of trimellitic acid, pyromellitic acid, hemimellitic acid, mellitic acid, derivatives thereof and mixtures thereof, preferably trimellitic anhydride.

In a preferred embodiment, component a2) is substantially free of component a22).

Component a2) may represent from 35 to 75%, in particular from 40 to 70%, more particularly from 55 to 65%, of the total weight of component a).

The amount of component a) used to obtain the polyester composition may be from 80 to 98%, in particular from 85 to 97%, more particularly from 90 to 95%, by weight based on the total weight of components a) + b) + c).

Branching polyacid component

Another component used to obtain the polyester composition of the invention is a branching polyacid component, also referred to as component b). Without willing to be bound by theory, it is believed the branching polyacid component improves the reactivity of the polyester composition and enhances the chemical resistance of the coating obtained by curing the polyester composition.

A branching polyacid component comprises or consists of at least one branching polyacid. A branching polyacid component may comprise or consist of a mixture of branching polyacids. A branching polyacid may be as defined above. The acid functionality of component b) is at least 3.

Component b) may comprise at least one branching polyacid selected from the group consisting of trimellitic acid, pyromellitic acid, hemimellitic acid, mellitic acid, derivatives thereof and mixtures thereof, preferably trimellitic anhydride.

The amount of component b) used to obtain the polyester composition may be from 1 to 20%, in particular from 2 to 10%, more particularly from 5 to 8%, by weight based on the total weight of components a) + b) + c).

Acid-reactive component

Another component used to obtain the polyester composition of the invention is an acid-reactive component, also referred to as component c).

An acid-reactive component comprises or consists of at least one acid-reactive compound. An acid-reactive component may comprise or consist of a mixture of acid-reactive compounds.

An acid-reactive compound is a compound bearing at least one functional group which is reactive towards carboxylic acid functional groups. In particular, an acid-reactive compound may bear at least one acid-reactive functional group selected from primary or secondary amino functional group, hydroxyl functional group and thiol functional group, preferably at least one primary or secondary amino functional group. Said acid-reactive functional group is preferably not directly attached to an aromatic ring. More particularly, an acid-reactive compound may bear at least one acid-reactive functional group of formula -CHR-X wherein:

R is hydrogen or alkyl, preferably H;

X is -NHR', -OH or -SH, preferably-NHR' or -OH; and

R' is H or alkyl, preferably H.

In particular, component c) may comprise or consist of at least one compound selected from an amino-alcohol, a primary or secondary amine, a polyamine, an amino-acid, a polyol and combinations thereof, preferably an amino-alcohol, an amine, a polyamine, an amino-acid and combinations thereof.

The amino-alcohol may be a compound bearing at least one primary, secondary or tertiary amino functional group and at least one hydroxyl functional group. When the amino-alcohol comprises a tertiary amino functional group, the nitrogen atom of said tertiary amino functional group is preferably not substituted with a branched alkyl group such as isopropyl, isobutyl or tert-butyl. Examples of suitable amino-alcohols include, but are not limited to, monoethanolamine, N-methylethanolamine, N,N-dibutylethanolamine, 1-amino-2-propanol, 2-amino-1-propanol, 3-amino-1-propanol, 3-amino-1-butanol, 4-amino-2-butanol, 3-amino-2-methyl-1-propanol, 3-amino-2-methyl-1-butanol, 4-amino-3-methyl-2-butanol, 2-(aminomethyl)-1-butanol, 3-amino-2,2-dimethyl-1-propanol, 4-amino-2-pentanol, 1-amino-3-pentanol, 3-amino-1-pentanol, 4-amino-2-methyl-2-butanol, 3-amino-3-methyl-1-butanol, 3-amino-2-(aminomethyl)-1-propanol, diethanolamine, 3-amino-1,2-propanediol, 2-(aminomethyl)-1,3-propanediol, 3-amino-1,5-pentanediol, 2-amino-1,4-butanediol, triethanolamine, triisopropanolamine and combinations thereof.

The primary or secondary amine may be a compound bearing a single primary or secondary amino functional group (and no hydroxyl functional group and no carboxylic acid functional group). Said primary or secondary amino functional group is preferably not attached to an aromatic ring. Examples of suitable amines include non-aromatic cyclic amines such as cyclohexylamine, morpholine or piperidine and N-alkylamines such as N-butylamine or 2-methylpropan-2-amine.

The polyamine may be a compound bearing more than one amino functional groups wherein at least one of said amino functional groups is a primary or secondary amino functional group. Examples of suitable polyamines include, but are not limited to, ethylene diamine, propylene diamine, butanediamine, pentane diamine, hexamethylene diamine, isophorone diamine, triethylene tetramine, and combinations thereof.

The amino-acid may be a compound bearing at least one primary or secondary amino functional group and at least one carboxylic acid functional group. The amino-acid may in particular be an $\alpha$-amino-acid. Suitable amino acids include, but are not limited to, glycine, serine, threonine, cysteine, proline, tyrosine and combinations thereof.

The polyol may be a compound bearing at least two hydroxyl functional groups (and no amino functional group). Examples of suitable polyols include, but are not limited to, ethylene glycol, propylene glycol, 1,3-propanediol, 1,4-butanediol, 1,5-pentanediol and combinations thereof.

Component c) may be free of a trialkylamine (i.e. a compound of formula $N(R^1)_3$ wherein each $R^1$ is independently an alkyl) such as triethylamine, tributylamine, tris(isobutyl)amine, tris(2-ethylhexyl)amine or N,N-dimethyl-3-amino-2,4-dimethylpentane. Component c) may be free of a sterically hindered amine (i.e an amine in which the carbon atoms adjacent to the nitrogen atom of the amino functional group do not have a hydrogen atom attached directly thereto) such as an optionally substituted 2,2,6,6-tetramethylpiperidine. Component c) may be free of a sterically hindered amino-alcohol (i.e. an amino alcohol wherein the nitrogen atom of the amino functional group is substituted with at least one branched alkyl group such as isopropyl, isobutyl or tert-butyl) such as tert-butyldiethanol amine or diisopropylethanolamine. Component c) may be free of an aromatic amine such as melamine, benzoguanamine, melem or melam. Component c) may be free of a tertiary amine bearing no acid-reactive functional group as defined above. Component c) may be free of an inert amino compound. The term "inert amino compound" means a compound comprising an amino functional group that does not react with the branching polyacid monomer during the preparation of the coating composition. Thus, an inert amino compound remains in essentially unreacted form in the polyester composition of the invention.

More particularly, component c) may comprise or consist of at least one compound selected from monoethanolamine, triisopropanolamine, dibutylethanolamine, triethylenetetramine, isophoronediamine, glycine, serine and combinations thereof.

The amount of component c) used to obtain the polyester composition may be from 0.1 to 3%, in particular from 0.15 to 2.8%, more particularly from 0.2 to 2.0%, by weight based on the total weight of components a) + b) + c).

Features of the polyester composition

The polyester composition resulting from the reaction of components a), b) and c) as detailed above may exhibit one or more of the following features.

The polyester composition of the invention may have an acid number of from 30 to 110 mg KOH/g, preferably from 40 to 105 mg KOH/g, more preferably from 50 to 100 mg KOH/g.

The polyester composition of the invention may have a hydroxyl number of less than 25 mg KOH/g, preferably less than 22 mg KOH/g, less than 20 mg KOH/g, less than 18 mg KOH/g or less than 15 mg KOH/g.

The polyester composition of the invention may have a number average molecular weight Mn from 1,000 to 10,000 g/mol, preferably from 1,500 to 8,000 g/mol, more preferably from 2,000 to 5,000 g/mol, even more preferably from 2,500 to 3,500 g/mol.

The polyester composition of the invention may have a polydispersity D (Mw/Mn) from 1.3 to 5, preferably from

1.3 to 4.5, more preferably from 2 to 4.2, even more preferably from 2 to 4.

The polyester composition of the invention may have a glass transition temperature Tg from 40 to 80°C, preferably from 50 to 70°C, more preferably from 52 to 69°C.

The polyester composition of the invention may have a melt viscosity from 5 to 55 Pa·s at 165°C.

The polyester composition of the invention may have an elemental nitrogen content of from 0.005 to 0.8%, in particular from 0.01 to 0.7%, more particularly from 0.015 to 0.6%, by weight based on the weight of the polyester composition.

The polyester composition of the invention may further comprise one or more additives selected from catalysts, antioxidants, stabilizers, electrostatic additives, and combinations thereof.

The catalyst may be selected from the group consisting of quaternary ammonium salts (e.g. tetrabutylammonium bromide or tetrapropylammonium chloride), quaternary phosphonium salts (e.g. ethyltriphenylphosphonium bromide or tetrapropylphosphonium chloride), tertiary amines (e.g. 2-phenylimidazoline), tertiary phosphines (e.g. triphenylphosphine) and mixtures thereof.

Examples of suitable antioxidants include phenolic antioxidants such as Irganox 1010 (Ciba)

Examples of suitable stabilizers include phosphonite- and phosphite-type stabilizers such as tris(nonylphenyl)phosphite and triphenylphosphite.

An electrostatic additive may be used to enhance the electrostatic chargeability of the coating composition, in particular when the coating composition is intended to be applied on the surface of the substrate using a triboelectric process (i.e. with a triboelectric spray gun that generates electrically charged particles by friction). Examples of suitable electrostatic additives include inert amino compounds. The term "inert" means that the electrostatic additive does not react with other components of the coating composition during the manufacturing steps of the coating composition, such as extrusion, or during the application of the coating composition on a surface of a substrate. Thus, the inert amino compound remains in essentially unreacted form in the coating composition and is free to perform its function as an electrostatic additive during the coating process. Examples of suitable electrostatic additives include a trialkylamine (for instance triethylamine, tributylamine, tris(isobutyl)amine, tris(2-ethylhexyl)amine, N,N-dimethyl-3-amino-2,4-dimethylpentane), a sterically hindered amine (for instance an optionally substituted 2,2,6,6,-tetramethyl-4-piperidyl), a sterically hindered amino-alcohol (for instance tert-butyldiethanol amine or diisopropylethanolamine), an aromatic amine (for instance melamine, benzoguanamine, melem, melam), a ureido-functionalized compound (such as urea, ureidomelamine and polyurea).

The total amount of additives in the polyester composition of the invention may be from 0 to 5% by weight based on weight of the polyester composition.

## Preparation process of the polyester composition

The polyester composition of the invention may be obtained by using component c) to reduce the amount of residual branching polyacid component in a carboxyl-functionalized polyester component obtained by reacting components a) and b).

In particular, the polyester composition of the invention may be obtained with the following successive steps:

i) forming a hydroxyl-functionalized polyester component a);
ii) forming a carboxyl-functionalized polyester component P by reacting components a) and b) such that component P contains an amount $x_1$ of residual component b);
iii) forming an additive component A by reacting at least part of residual component b) of component P with component c) such that the polyester composition contains an amount $x_2$ of residual component b) that is less than $x_1$.

Components a), b) and c) may be as described above.

The above process may lead to a polyester composition comprising a branched carboxyl-functionalized polyester, an additive component and optionally a residual amount of component b), wherein the additive component corresponds to the reaction product of at least part of the component b) with component c).

In step i), component a) may be formed by reacting a polyol component a1) and a polyacid component a2). Components a1) and a2) may be as described above. The reaction may be conducted by heating components a1) and a2) at a temperature of 135°C to 250°C, optionally in the presence of a catalyst and/or a stabilizer. Examples of suitable catalysts include dibutyltin oxide, dibutyltin dilaurate, n-butyltin trioctoate, sulphuric acid or a sulphonic acid, tetraisopropyl titanate or tetra-n-butyl titanate. The amount of catalyst may be from 0.02 to 1.50% by weight based on the weight of components a1) + a2). Examples of suitable stabilizers include phenolic antioxidants such as Irganox 1010 (Ciba) or phosphonite- and phosphite-type stabilizers such as tris(nonylphenyl)phosphite and triphenylphosphite. The amount of

stabilizer may be from 0 to 1% by weight based on the total weight of components a1) + a2).

Step i) may be carried out by gradually increasing the heating temperature, for example from about 130°C to about 190 to 250°C, first under normal pressure, then, when necessary, under reduced pressure. These operating conditions may be maintained until a polyester having the desired hydroxyl number and/or acid number is obtained. The degree of esterification may be followed by determining the amount of water formed in the course of the reaction and the properties of the obtained polyester, for example the hydroxyl number, the acid number, the molecular weight or the viscosity.

In particular, step i) may be carried out until component a) has an acid number of from 3 to 100 mg KOH/g, preferably from 4 to 80 mg KOH/g, more preferably from 5 to 60 mg KOH/g.

In step ii), the polyester component P may be obtained by adding component b) in the mixture obtained at the end of step i) and heating at a temperature of 150°C to 220°C. The water formed during the esterification reaction may be removed by distillation, under vacuum or with an azeotrope-forming solvent. These operating conditions may be maintained until a polyester having the desired hydroxyl number and/or acid number is obtained. The degree of esterification may be followed by determining the amount of water formed in the course of the reaction and the properties of the obtained polyester, for example the hydroxyl number, the acid number, the molecular weight or the viscosity.

The value $x_1$ of residual component b) obtained at the end of step ii) may be from 0.8 to 5%, preferably from 0.9% to 4.5%, more preferably from 1% to 4%, by weight based on the weight of component P.

Component P obtained in step ii) may have an acid number of from 50 to 115 mg KOH/g, preferably from 55 to 110 mg KOH/g, more preferably from 60 to 105 mg KOH/g.

Component P obtained in step ii) may have a hydroxyl number of from 0.5 to 25 mg KOH/g, preferably from 1.0 to 20 mg KOH/g, more preferably from 1.5 to 15 mg KOH/g.

In step iii), the additive component A may be obtained by adding component c) in the mixture obtained at the end of step ii) and heating at a temperature of 150°C to 220°C. These operating conditions may be maintained until the desired value of $x_2$ of residual component b) is obtained.

The value of $x_2$ of residual component b) obtained at the end of step iii) is lower than $x_1$. In particular, $x_2$ may be less than 2.5%, preferably less than 1%, more preferably less than 0.1 %, by weight based on the weight of the polyester composition. More particularly, $x_2$ may be from 0 to 2.5%, preferably from 0.001 to 1, more preferably from 0.01 to 0.1%, by weight based on the weight of the polyester composition.

The ratio $\frac{x_1-x_2}{x_1}$ may be at least 0.2, preferably at least 0.4, more preferably at least 0.6. In particular, the ratio $\frac{x_1-x_2}{x_1}$ may be from 0.2 to 1, preferably from 0.4 to 0.9, more preferably from 0.6 to 0.8.

The process may further comprise an optional step iv) of adding one or more additives selected from catalysts, antioxidants, stabilizers, electrostatic additives, and combinations thereof. These additives may be as detailed above for the polyester composition.

The process provides good control of the acid functionality and polydispersity of the polyester and provides good flow properties combined with low crosslinking functionality and good film forming properties.

## Coating composition

The polyester composition according to the invention may be used in a coating composition, preferably in a powder coating composition, more preferably in a crosslinkable powder coating composition. The polyester composition may especially act as a binder in such coating compositions.

Accordingly, another object of the invention relates to a coating composition comprising

- the polyester composition according to the invention;
- a crosslinking component;
- optionally a catalyst;
- optionally one or more additives.

The coating composition of the invention comprises the polyester composition as described above.

The total amount of polyester composition in the coating composition of the invention may be from 20 to 80%, preferably from 25 to 75%, more preferably 27 to 70% by weight based on weight of the coating composition.

The coating composition of the invention comprises a crosslinking component.

A crosslinking component comprises or consists of at least one crosslinking compound. A crosslinking component may comprise or consist of a mixture of crosslinking compounds. A crosslinking compound is a compound bearing

at least two functional groups which are reactive towards the functional groups present in the polyester composition, in particular towards the carboxylic acid functional groups present in the polyester composition. For example, a crosslinking compound may bear at least two functional groups selected from epoxide or hydroxyl, preferably at least two epoxide functional groups.

In one embodiment, the crosslinking component comprises at least one epoxy resin. An epoxy resin may be defined as a compound bearing at least two epoxide functional groups.

The epoxy resin may have an epoxide equivalent weight (EEW) from 400 to 1000 g/eq, in particular from 500 to 900 g/eq, more particularly from 600 to 850 g/eq, even more particularly from 700 to 800 g/eq.

The epoxy resin may be solid at 25°C. The epoxy resin may have a low melt viscosity to facilitate its extrusion in admixture with other components of the coating composition, preferably at temperatures below 200°C. For example, the epoxy resin may have a melt viscosity from 0.6 to 6 Pa·s at 150°C and preferably from 2 to 5 Pa·s at 150°C.

The epoxy resin may be selected from a glycidyl ether resin or triglycidylisocyanurate, in particular a glycidyl ether resin based on bisphenol A or bisphenol F.

Preferred epoxy resins for the purposes of this invention are bisphenol A epoxy resins, such as those sold under the trademarks ARALDITE® GT-7004, GT-7071, GT-7072 or GT-6259 (Huntsman LLC) or EPON® 1001 and 2042 (Shell Chemicals, Inc.).

The mixing ratio of the polyester composition and the epoxy resin is generally chosen such that the ratio of carboxyl functional groups of the polyester composition to epoxide functional groups of the epoxy resin is from 0.9:1.1 to 1.1:0.9.

In another embodiment, the crosslinking component comprises a β-hydroxyalkylamide.

The β-hydroxyalkylamide may have at least two hydroxyl groups. The β-hydroxyalkylamide may be according to the following formula (I):

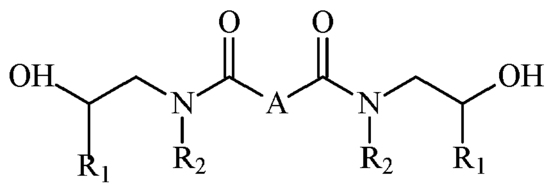

(I)

wherein:

A is an organic group derived from a saturated, unsaturated or aromatic hydrocarbon group having from 1 to 24 carbon atoms, preferably A is a C2-C12 alkylene;

each $R_1$ is independently hydrogen or a C1-C5 alkyl, preferably each $R_1$ is independently hydrogen or methyl;

each $R_2$ is independently hydrogen, a C1-C5 alkyl or $-CH_2-CH(R_1)-OH$, preferably each $R_2$ is $-CH_2-CH(R_1)-OH$.

Examples of suitable β-hydroxyalkylamides include N,N,N',N'-tetrakis(2-hydroxyethyl)adipamide (Primid XL552 from EMS) and N,N,N',N'-tetrakis(2-hydroxypropyl)adipamide (Primid QM1260 from EMS).

The mixing ratio of the polyester composition and the β-hydroxyalkylamide is generally chosen such that the ratio of carboxyl functional groups of the polyester composition to hydroxyl functional groups of the β-hydroxyalkylamide is from 0.9:1.1 to 1.1:0.9.

The total amount of crosslinking component in the coating composition of the invention may be from 3 to 50%, preferably from 4 to 45%, more preferably 5 to 40% by weight based on weight of the coating composition. When the crosslinking component is an epoxy resin, the total amount of crosslinking component may be from 20 to 50% by weight, based on weight of the coating composition. When the crosslinking component is a β-hydroxyalkylamide, the total amount of crosslinking component may be from 5 to 15% by weight, based on weight of the coating composition.

The coating composition of the invention may optionally comprise a catalyst.

A catalyst is preferably present when the crosslinking component comprises an epoxy resin.

A catalyst may not be required when the crosslinking component comprises a β-hydroxyalkylamide.

The catalyst may be selected from the group consisting of quaternary ammonium salts (e.g. tetrabutylammonium bromide or tetrapropylammonium chloride), quaternary phosphonium salts (e.g. ethyltriphenylphosphonium bromide or tetrapropylphosphonium chloride), tertiary amines (e.g. 2-phenylimidazoline), tertiary phosphines (e.g. triphenylphosphine) and mixtures thereof.

The degree and the rate of crosslinking may depend in part on the amount of catalyst. The amount of catalyst should not be too high to allow sufficient time for flow and film formation and it should not be too low because that would result in low crosslinking density and poorer mechanical properties. The catalytic activity is best reflected by the resulting

gel time. Gel time corresponds to the time after start of crosslinking reaction which the viscosity rises such that the material ceases to be free flowing (see method description).

In general, good balance of properties can be achieved with gel times between 100 and 800 sec at the curing temperature of 130-140°C. The amount of catalyst is preferably chosen to obtain a gel time of 200-800 seconds, preferably 250-600 seconds, more preferably 300-500 seconds and more preferably 380 to 420 seconds, at a curing temperature of 140°C, on a composition having a ratio R of 0.95 wherein R is defined as the ratio of moles of carboxylic acid groups in polyester composition to moles of epoxide functional groups in the epoxy resin.

When present, the total amount of catalyst in the coating composition of the invention may be from 0.1 to 10%, preferably from 0.5 to 5%, more preferably from 1 to 3%, by weight based on weight of the coating composition.

The coating composition may further comprise one or more additives selected from pigments and dyes, flow agents and levelling agents, degassing agents, UV absorbers, antioxidants and stabilizers, electrostatic additives, waxes and combinations thereof.

Examples of suitable pigments and dyes include metallic oxides (e.g. titanium dioxide, iron oxide or zinc oxide), metal hydroxides, metal powders, sulphides, sulphates, carbonates, silicates (e.g. ammonium silicate), carbon black, talc, china clay, barytes, iron blues, lead blues, organic reds and organic maroons.

Flow and levelling agents may be used to improve the melt-flow properties of the composition and reduce surface defects in the final coating. Examples of suitable flow agents and levelling agents include (meth)acrylic polymers and fluorine polymers such as BYK-360 P, BYK-361 and BYK-300 (Byk Chemie), Resiflow® PV5, Resiflow® P-67 and Resiflow® P-200 (Worlee), Modaflow® (Allnex) and Acronal® 4F (BASF).

A degassing agent may be used to remove the gas and/or water entrapped in the composition and reduce surface defects in the final coating. An example of a suitable degassing agent is benzoin.

Examples of suitable UV absorbers, antioxidants and stabilizers include benzotriazoles such Tinuvin® 900 (Ciba), UV-234 PD and UV-928 PD (MPI Chemie), hindered amine light stabilizers such as Tinuvin® 144 (Ciba), LS-119 and LS-4050 (MPI Chemie), other stabilizing agents such as Tinuvin® 312 and 1130 (Ciba), antioxidants such as Irganox® 1010 (Ciba) and phosphonite or phosphite stabilizers.

An electrostatic additive may be as defined above for the polyester composition.

Examples of suitable waxes include polyethylene wax, polypropylene wax and polyamide wax.

The total amount of additives in the coating composition of the invention may be from 0 to 25% by weight based on weight of the coating composition.

The coating composition may be a powder coating composition. As used herein, the term "powder coating composition" means a composition that is in free-flowing particulate form at a temperature of 25°C. In particular, the coating composition may be in the form of flakes or pellets or in the form of a powder which preferably has a volume median diameter Dv50 of from 10 to 250 μm, more preferably from 30 to 150 μm, as determined by laser granulometry.

Another object of the present invention is a preparation process of the coating composition.

The coating composition of the invention may be prepared by melt-blending the ingredients of the coating composition. The melt-blending step may be carried out in an extruder. The melt-blending step should be carried out under conditions to avoid premature curing of the coating composition (i.e. by carrying out the melt-blending step at a temperature that is lower than the curing temperature of the coating composition and/or by limiting the duration of the melt-blending step). The melt-blending step may be carried out at a temperature of from 80°C to 130°C. The melt-blending step may be carried out for less than 5 minutes. Prior to the melt-blending step, the process may comprise an optional step of pre-blending the ingredients of the coating composition. The pre-blending step may be carried out in a mixer, in particular a high shear mixer or a high-intensity dry mixer. The pre-blending step may be carried out at a temperature of 20 to 25°C. After the melt-blending step, the resulting mixture may be cooled to a temperature of 20 to 25°C and subsequently transformed into flakes, pellets or a powder. The coating composition can subsequently be applied on at least part of a surface of a substrate and cured so as to form a coated substrate as detailed below.

## Coating and coated substrate

The coating composition of the invention may be used to obtain a coating.

Accordingly, another object of the present invention is a coating obtained by curing the coating composition according to the invention.

The curing may be carried out by heating the coating composition at a temperature of from 120 to 200°C, in particular from 125 to 195°C, more particularly from 130 to 190°C, even more particularly from 135 to 185°C, more particularly still from 140 to 180°C. The heating may be carried out for a period of 1 to 60 minutes, preferably 5 to 40 minutes.

The coating may have a crosslink density of at least 0.05 mmole/mL, preferably at least 0.08 mmole/mL, more preferably at least 0.1 mmole/mL and most preferably at least 0.15 mmole/mL. Such crosslink density may provide good solvent resistance to the coating.

Due to the enhanced reactivity of the coating composition of the invention, the coating composition may be

fully cured by heating at a temperature that is lower than that of conventional coating compositions. In a preferred embodiment, the curing may be conducted by heating the coating composition at a temperature of from 120 to 160°C, preferably from 120 to 155°C, more preferably from 120 to 150°C, even more preferably from 120 to 145°C and most preferably from 120 to 140°C.

Another object of the present invention is a substrate that is fully or partially coated with the coating according to the invention.

The substrate may be any type of substrate, such as a cellulosic substrate (e.g. hardwood, a particleboard or a fiberboard), a plastic substrate or a metallic substrate.

Due to the enhanced reactivity and the reduced curing temperature of the coating composition of the invention, a broad diversity of substrates may be coated with the coating according to the invention.

In particular, the substrate may be a heat-sensitive substrate. As used herein, a heat-sensitive substrate is a substrate that is at least partially degraded if heated at a temperature that is higher than 160°C, preferably higher than 155°C, more preferably higher than 150°C, even more preferably higher than 145°C and most preferably higher than 140°C.

Another object of the present invention is a process for coating a substrate comprising the following steps:

- applying the coating composition according to the invention on at least part of a surface of a substrate; and
- curing the coating composition.

The application step may be conducted by electrostatic spraying or by the use of a fluidized bed. Electrostatic spraying is preferred. The coating composition can be applied in one pass or in several passes to provide a film thickness after cure of 10 to 120 μm. The substrate can optionally be preheated prior to application of the coating composition. The preheating step may promote a more uniform deposition of the coating composition on the substrate. The substrate may be as detailed above. The curing step may be conducted as detailed above.

The present invention is further illustrated by, but not limited to, the following examples.

## EXAMPLES

### Test Methods

The test method used in the present invention are detailed below.

#### Acid Value (AV)

A freshly neutralized dimethylformamide is prepared. A quantity of resin is accurately weighed out into a 250 mL conical flask. 50-60 mL of solvent is then added. The solution is heated gently until the resin is entirely dissolved and ensuring the solution does not boil. The solution is cooled down to room temperature, few drops of phenolphthalein indicator are added and finally titrated with standard potassium hydroxide until the end point is reached (appearance of pale pink color, ideally matching that in the stock bottle solution). The acid value is calculated according to the following formula:

$$\text{Acid Value (mg KOH/g)} = (\text{Titre/mL} \times N \times 56.1) / \text{Mass of Resin/g}$$

where:
N = normality of potassium hydroxide solution

#### Hydroxy Value (OHV)

The OHV was determined by manual titration of the prepared blanks and sample flasks. Firstly, the sample is passed through the grinder until a fine powder is obtained. Then, in an erlenmeyer, an approximating up to the milligram, a sample is weighted close to the expected 170/IOH. 25 mL of pyridine are added with a dispenser and the mixture is heated without boiling and stirred until complete dissolution. After that, the mixture is cooled down and 10 mL of the acetylation reagent and 5 mL of the catalyst solution are added with a pipette or a dispenser. The refrigerant is placed in the erlenmeyer and mixtures are hold for 10 minutes in the bath at 100°C, stirring slightly at the beginning to promote the solution of the sample. 4 mL of distilled water are added for the coolant and then the mixture is stirred, keeping the sample in the bath for another additional 5 minutes. The sample is cooled down and 50 mL of dimethylformamide and 10 mL of butyl alcohol neutralized are added by the coolant. When it reaches room temperature, the coolant is removed.

Then, the mixture is stirred in order to get a homogeneous solution without precipitate. The sample is then titrated immediately with methanolic potassium hydroxide solution, in the presence of phenolphthalein indicator, until a pale pink end point. Samples and blanks must be done by duplicate and proceed in parallel under the same conditions.

The hydroxyl value (OHV) is then calculated according to the following formula:

$$\text{Hydroxy Value (OHV)} = ((B - S) \times N \times 56.1) / M + AV$$

where:

B = mL of KOH used for blank titration
S = mL of KOH used for sample titration
N = normality of potassium hydroxide solution
M = sample weight (base resin)
AV= Acid Value of the base resin

The Net Hydroxy Value is defined as:

$$\text{Net OHV} = (B - S) \times N \times 56.1/M$$

<u>Viscosity</u>

Viscosity is determined by measuring the torque caused by a sample placed between a fixed plate and a CONE that rotates at a known speed. Velocity gradients and margin of viscosity for CONES 05 and 06 are the following:

| | **SPEED GRADIENT (seg$^{-1}$)** | **VISCOSITY RANGE (Poises)** |
|---|---|---|
| **CONE 5** | 167 - 6667 | 1,50 - 600 |
| **CONE 6** | 167 - 6667 | 3,75 - 1500 |

The viscosity was determined using a Brookfield CAP 2000 H+ viscometer, with the possibility of selecting temperatures from 50 up to 200°C and speeds from 50 to 1000 rpm, calibrated according to internal methods.

For viscosity determination of high viscosity polyesters (165°C, 20 seconds), the required cone is selected and correctly fitted depending on the maximum viscosity of the sample.

| | **CONE** | |
|---|---|---|
| **RPM** | **5** | **6** |
| 50 | 600 | 1500 |
| 100 | 300 | 750 |
| 200 | 150 | 375 |
| 300 | 100 | 250 |
| 400 | 75 | 187,5 |
| 500 | 60 | 150 |
| 600 | 50 | 125 |
| 700 | 42,85 | 107,1 |
| 800 | 37,5 | 93,75 |
| 900 | 33,33 | 83,33 |
| 1000 | 30 | 75 |
| 1100 | 27,27 | 68,18 |

(continued)

| | CONE | |
|---|---|---|
| RPM | 5 | 6 |
| 1200 | 25 | 62,5 |
| 1300 | 23,07 | 57,69 |
| 1400 | 21,42 | 53,57 |
| 1500 | 20 | 50 |
| 1600 | 18,75 | 46,87 |
| 1700 | 17,64 | 44,11 |
| 1800 | 16,66 | 41,66 |
| 1900 | 15,78 | 39,47 |
| 2000 | 15 | 37,5 |

The cone and plate are cleaned using dimethylformamide. The needle is correctly zeroed. A small amount of the resin sample (35 ± 5 mg) is placed and melted on the heated plate, the cone is lowered (the sample has to protrude 1 mm around the CONE), as well as the protector (in order to to avoid temperature fluctuations, produced by air currents). A small excess spreads out around the side. Once the device has reached the working temperature and the sample has been thoroughly de-gassed by raising and lowering the cone a several times, the cone rotation button is pressed and a reading is then taken. This process is repeated until a reproducible highest stable reading is obtained.

Resin gel time

A resin sample (approx. 20 - 30g) is taken from the vessel and left to cool to room temperature. The acid value and the viscosity at 165°C of the resin are measured and based on this value, the amount of crosslinking component (Araldite GT-7004 or HAA) required to give the stoichiometric ratio r = 1, according to r = (equivalents of carboxyl acid groups from the polyester)/(equivalents of epoxy groups from GT-7004 or equivalents of hydroxy groups from HAA), is calculated. The resin and crosslinking component are accurately weighed out and ground together in a coffee grinder for 1 minute exactly. Care is taken to ensure that the temperature of mix remains close to ambient to avoid impact fusion of the powder. A Coesfeld Material test gel tester is used to determine the resin gel time. Prior to testing, the gel tester is set to 140°C (or 180°C) and the instrument allowed to stabilize at the test temperature. The hot plate is screened to prevent air movement affecting temperature stability.

Once the gel tester temperature has stabilized, a controlled amount of the ground powder is placed into the gel tester hot plate (normally 1g) and the timer is started. As the sample starts to melt, the material is compounded with a wooden cocktail stick using a circular motion. As the sample reacts, the viscosity rises until a point is reached when the material ceases to be free flowing and starts to form a tacky cohesive ball. The end point is reached when the sample is in this condition and is able to detach from the tip of the stick or from the surface of the hot plate. Immediately stop the timer and record the result (in seconds). The test is repeated until at least three sets of results are consistent.

Molecular Weight by GPC

Number average molecular weight (Mn) and weight average molecular weight (Mw) and weight distribution of the molecules in non-aqueous polymers and that are soluble in tetrahydrofuran (THF) were determined by molecular size exclusion liquid chromatography technique (GPC, gel permeation chromatography) using a universal calibration.

Using this technique, a solution of polymer in THF is injected into a series of chromatographic columns packed with a stationary phase porous membrane that separates molecules according to their molecular size. Separated molecules arrive at the refractive index detector and its signal is recorded as a distribution over time, or elution volume.

GPC was carried out on Agilent Technologies HP 1100 Liquid Chromatograph provided with an automatic sampler G1313A, with Agilent Technologies Chemstation software, G1362A Refractive Index Detector and Waters Styragel Columns HR-1 (100Å pore size, 100 - 5000 Mw range), HR-2 (500Å pore size, 500 - 20000 Mw range) and HR-4 (10000Å pore size, 5000 - 60000 Mw range).

Columns were installed in series in order: HR4, HR2 and HR. Carrier liquid (THF) was previously filtered with the filtration kit and filters Millipore FH 0.5 microns with a flow rate of 1 mL/min. The working temperature was 22°C.

A 1% dilution in standard solution is prepared for pure samples and at 2% if was about diluted samples. Then, the solution was filtered with 0.45μ PTFE filters and was placed in a vial of 2mL. 100 μL of the solution were injected into the chromatograph. Thus, a chromatogram and the distribution of molecular weights were obtained from the calibration line.

The calibration was obtained from the pattern kit, which was provided with two series of spatulas (A and B) impregnated each of them with 5 mg of standard polymers. Separately, a spatula of each series was diluted in 2 mL of standard solution, filtered and introduced in a 2 mL vial. 1 μL of styrene PA as marker was added to solution B.100 μL of each solution were injected using the working conditions. A calibration line between 7500000 and 10 was thus obtained.

Tg bv DSC

In amorphous and semicrystalline polymers, the transition from crystal to liquid-viscos status, is characterized by the Glass Transition Temperature (Tg). This value depends on the chemical composition and the molecular weight of the polymer.

The DSC technique is used to determine the Tg of a product that involves the sudden increasing in the value of the Specific Heat (Cp), that is manifested in the change from the base line of the DSC graph. This change is measured by device giving a value.

The Tg values reported herein are the inflection point Tg's determined at the inclination point of the DSC curve. The DSC curve was determined using a heating rate of 10°C/min on DSC Mettler Toledo Model 821 using aluminium crucible with lid and without pin (ME-51119870 and ME-51119873).

Samples were weighed directly into a crucible with a precision scale, about 10 mg of sample, which must be grinded so that the contact with the bottom of the crucible be total. The lid was sealed and placed the covered crucible in the automatic sampler. The sampler robot has a built-in needle for drilling the lid.

Residual trimellitic anhydride (TMA) and acid (ATM) determination in saturated polyesters

The aim of the method is to determine the amount of residual trimellitic anhydride and trimellitic acid in saturated polyester resins.

The anhydride is esterified into the monomethyl ester with dry methanol, but the acid is not esterified in the same conditions, being extremely important to work over anhydrous conditions to avoid the hydrolysis of the anhydride into acid.

Both species are determined by HPLC with photodiode array detector (λ=240 nm) and external standard calibration method.

Liquid chromatograph 1260 Infinity II with photodiode array detector by Agilent Technologies is used in the residual TMA and ATM determination, equipped with InfinityLab Porodhell 120 EC-C18 column (3.0 × 150 mm 2.7μ) by Agilent Technologies and with OpenLab software also provided by Agilent Technologies.

For the calibration process, 2.0 mg (± 0.1 mg) of TMA were weighed into a 150 mL frosted neck erlenmeyer equipped with a magnetic stirrer. 25 mL of dry methanol were added and a tub with desiccant sieves. The solution was kept at reflux for 45 minutes and then it was quantitatively transferred to a 100 mL volumetric flask, completing to volume with HPLC grade water. The solution was filtered on a 0.45 μm nylon filter into a 2 mL HPLC vial. A set of standard solutions following the previous conditions were prepared. Thus, a calibration curve was plotted, repeating the process for ATM. Approximately, retention times values of ATM was 3.2 min and TMA was 6.7 - 12.1 min (2 peaks of different isomers formed).

For TMA and ATM determination in samples, 0,5000 g (±0.0001 g) were weighted following the same procedure described above and analyzing these solutions by HPLC using a 20 minutes method, with a constant flow of 0.4 mL/min, 90% volume of water with 0.1% (v/v) formic acid and 10% volume acetonitrile, 20 μL injection volume and λ = 240 nm.

Final results were obtained determining the peak areas for each component and then determining the component level as mg/L using the calibration curve.

The difference between results should not exceed 5 %.

Impact Test

The impact test was carried out in accordance with ISO 6272-2/ASTM D2794 (Class 1: powder coatings; one- and two-coat) on the powder coatings panels on the reverse side, whereas the results are assessed on the coated side using an indenter diameter of 15.9 mm and impact energy 2.5 Nm and using a Sheen Model 806 impact testing machine, 40 inch tubular tester with 15.9 mm (625") indenter and 16.3 mm (640") die.

Panels were prepared as described below. In order to ensure a statistically representative result, each test consists of six impacts across one panel with the coating applied at a consistent thickness of 60-80 μm. The results are

quoted as the number of impact domes that show no evidence of coating failure, according to accreditation bodies specifications.

Flexibility (conical mandrel)

Flexibility of a coating was tested in accordance with ASTM D522 - 93a (2008) Standard Test.

Methods for Mandrel Bend Test of Attached Organic Coatings using a Sheen Conical mandrel bend tester. The test panel is clamped onto a varying-radius mandrel and force applied to bend the coated panel. The test panel is then visually examined for evidence of cracking along the deformed surface.

Flexibility (T-bend test)

The standard test method for coating flexibility of prepainted sheet is run in accordance with ASTM D4145-10 (2018).

Weathering

Resistance to weathering was assessed using the weatherometer and UV exposure testing.

Solvent Resistance

Evaluation for solvent resistance by solvent rub test - ASTM D5402 - 93 (1999). This test method is used to determine the degree of cure of a baked film by the paint film resistance to a specified solvent.

The solvent rub test is performed using methyl ethyl ketone (MEK) as the solvent. The MEK resistance or degree of cure applies to powder coating paint topcoats and primers.

ASTM D5402 - 93 (1999) involves rubbing the surface of a baked film with a cotton wool pad wetting with MEK until failure or breakthrough of the film occurs. The type of the cotton wool pad, the stroke distance, the stroke rate, and approximate applied pressure of the rub are specified. The rubs are counted as a double rub (one rub forward and one rub backward constitutes a double rub and should take approximately 1 second). This is repeated 100 times or until the coating fails (the coating is rubbed through to the metal surface) if this is sooner. The number of double rubs to rub through, or 200 if no rub through is observed, is noted. The test is used widely in the paint industry because it provides a quick relative estimation of degree of cure without having to wait for long-term exposure results.

Appearance (Visual flow PCI)

To assess flow and appearance, powder coated test panels are compared to a set of Powder Coating Institute standard panels. These panels represent the degrees of smoothness achievable with powder coatings and have graduated degrees of orange peel (flow) and powder smoothness from rough to smooth. The standard panels consists of ten 4x6 inch panels which are black painted and labeled with their corresponding orange peel (flow) rating from 1 to 10. The test panels are compared to the standard panels in order to visually evaluate the appearance of painted test panels. The test panels are assigned the value of flow most closely matching the standard panels.

The appearance is then evaluated on the significant surface. The significant surface shall be defined by the customer and is the part of the total surface which is essential to the appearance and serviceability of the item. Edges, deep recesses and secondary surfaces are not included in the significant surface. The organic coating on the significant surface shall not have any scratches through to the base metal. When the organic coating on the significant surface is viewed at an oblique angle of about 60° to the upper surface, none of the defects listed below shall be visible from a distance of 3 meters: excessive roughness, runs, blisters, inclusions, craters, dull spots, pinholes, pits, scratches or any other unacceptable flaws. The organic coating shall be of even color and gloss with good hiding power. When viewed on site, these criteria shall be fulfilled as follows:

- for parts used outside: viewed at a distance of 5 m
- for parts used inside: viewed at a distance of 3 m

Tape adhesion

The lattice method is described to measure the adhesion of a dry paint film on metal surfaces, using a cutting knife according to ASTM D3359 (1993) method B and a 25 mm transparent adhesive tape with a pre-agreed adhesive strength.

An area free of defects and surface imperfections is selected, making sure it is clean and dry. Extreme values of temperature and humidity can affect the results. The specimen is placed in a firm place and parallel cuts are made according to the following specifications:

- For dry thicknesses up to 50 microns, the cuts are spaced 1 mm apart.
- Between 50 and 125 microns, the cuts are spaced 2 mm, making all the cuts approx. 20mm long and pressing just enough to cut the film until touching the substrate.

The surface is cleaned with a brush or tissue in order to remove any residue. Subsequent cuts are made at 90° centered on the initials, cleaning the surface again. The incisions should have reached the metal, if not, a trellis is made again in another area.

Two full strips of tape are removed. A third is stretched at a steady pace and is cut a length of 75 mm.

The center of the tape is placed over the center of the trellis and is spread over its area gently with the finger. To ensure a good contact, rubbing over with the extreme rubber of a pencil. The color under the tape is a good indication that the contact is well made.

After 90±30 sec. of the application, the adhesive tape is stretched by one end and at a constant speed at an angle as close as possible to 180°. The trellis area is inspected for possible paint peeling. A classification of adhesion is given according to the visual patterns. The test is repeated in two other places on each specimen.

In multi-layer systems, is needed to specify where the adhesion has failed: between the first layer and the substrate, between the first and the second, etc.

Flow test (incline method)

The inclined flow test is run in accordance with ASTM D4242 or ISO 8130-11.

Gel time of a thermosetting powder coating

The standard test method for gel time determination of thermosetting powder coatings obtained at a given temperature is run in accordance with ASTM D4217-07 or ISO 8130-6:1992.

Thickness of dry film

The standard method for measuring the thickness of dry film on surfaces is carried out as it is described in ASTM D7091-22 OR ISO 19840.

A layer thickness measuring device according to ISO 2178 is used. The instrument is calibrated according to the procedure in an area free of magnetic and electric fields, as well as vibrations, making sure that the coating is totally dry and clean before using the instrument.

The readings are taken in a place without vibrations or magnetic or electric fields. A sufficient number of readings are made to characterize the surface. For laboratory measurements, a minimum of three readings on a 75×150 mm plate are recommended more in proportion to its size. For field measurements, a minimum of 5 measurements are recommended, made everywhere for a surface of 10 m2. Each of the 5 determinations must be the average of 3 separate readings within an area circular of 12 mm. in diameter.

Penetration test

The method described to carry out the indentation test on a dry film of powder paint, using an embossing device according to INTA 16.02.63.A-1976.

Test tubes of at least 7×7 cm. and 0.3-1.25 mm. of thickness are prepared. The test is carried out at 20°C, in a controlled humidity and the test tubes will remain in these conditions a minimum of 16 h. once dried and before starting the essay.

The test tube is firmly hold between the matrix and the clamp on the device, in such a way that the ball rests on the unpainted part. The measurement scale is set to zero. The ball must advance at a constant speed of 0.2 mm/sec until it is observed a breaking, cracking or peeling of the film or until the depth of drawing corresponds to that specified in the sample.

The indentation depth is read with an accuracy of 0.1 mm. The results must indicate the nature, thickness and preparation of the test tubes used, the method used for film extension and thickness and how to make the observation (naked eye or magnifications).

Gloss of dry film

The method for measuring the gloss on a dry powder coating film over metal surfaces is run using a glossmeter according to ASTM D523 (1994). This test method covers the measurement of the specular gloss for glossmeter geometries of 60, 20, and 85°.
Each specimen is placed under or on the glossmeter. In case brush marks or similar texture effects are present, ensure that the directions of the marks are parallel to the axes of the incident and reflected lights of the device. A minimum of 3 measurements are needed in an area of 75x150 mm. If the margin is greater than two units, an additional measurement is taken and the average afterwards is calculated to discard divergent values.

Distinctness-of-image (DOI)

The standard method for the instrumental measurement of distinctness-of-image (DOI) gloss of coated surfaces is run according to ASTM D5767-18 using electro-optical measuring techniques. Although test methods D523 and D4039 are useful in characterizing some aspects of glossy appearance, they do not provide satisfactory ratings for DOI (image clarity). The measurement conditions given conform to the conditions specified in test methods E430 and ISO 10216.

Haze

The standard method ASTM D5382-02 (2017) provides guide to evaluation and testing of color, color difference, gloss, metamerism, and miscellaneous optical properties of optical powder coatings by both visual and instrumental means.
Visual evaluation of optical properties shall include visual gloss test method, Munsell Color Order System, and ASTM test standards indicated in the specification. Instrumental evaluation of optical properties shall include specular gloss test, filter photometry, reflection haze, fluorescence, and ASTM test standards indicated in the specification.

Elemental nitrogen content

The theoretical elemental nitrogen content can be calculated based on the amount by weight of nitrogen atoms in the acid-reactive component c) with respect to the total weight of the polyester composition.

**Abbreviations**

The following materials and abbreviations are used in the examples.

***NPG*: Neopentyl glycol
***EG*: Ethylene glycol
***DEG*: Diethylene glycol
***PG*: Propylene glycol
***TMP:*** Trimethylolpropane
***IPA:*** Isophthalic acid
***TPA:*** Terephthalic acid
***AA*: Adipic acid
***TMA:*** Trimellitic Anhydride
***MEA*: Monoethanolamine
***TIPA***: Triisopropanolamine
***DBEA****:* Dibutylethanolamine
***TETA****:* Triethylenetetraamine
***IPDA****:* Isophoronediamine
**Gly**: Glycine
**(L)-Ser**: (L)-serine
***BuSnTO****:* n-butyltin trioctoate
***TNPP****:* Tris(nonylphenyl) phosphite
***TriEHA:*** Tris(2-ethylhexyl)amine***EtTPPBr*.** Ethyl Triphenyl Phosphonium Bromide
***HAA***: β-hydroxyalkyl amide (EMS-Chemie PRIMID® XL-552)
***Araldite GT-7004****:* (polyfunctional epoxy-ester B)
***AV*: Acid value
***P*: Poise

***Wt*** %: Weight percent
***Mn***: Number average molecular weight
***Mw***: Weight average molecular weight
***D***: Polydispersity
***Tg:*** Glass transition Temperature
***Film Tg:*** Glass transition Temperature of the cured film
***St***: Standard

Example 1: Polyester composition without acid-reactive component (comparative)

NPG (100%, 459g), EG (47g), TMP (9g), TNPP (1.8g) and BuSnTO (1.8g) were charged to a 6L glass reaction vessel, equipped with stirrer, packed column with top thermocouple, condenser, distillate collection vessel, nitrogen sparge, vacuum line and thermocouple. The vessel was heated via an electric mantle until the contents were molten and mobile. TPA (796g) was added to the vessel, nitrogen blanket was applied and the contents stirred vigorously. The vessel was continuously heated to keep a column top temperature of around 99°C indicating continuous distillation of reaction water. During the distillation process, the batch temperature was progressively increased and allowed to rise to 235°C. The batch contents were regularly sampled, cooled, and visually checked for clarity. When batch contents were clear when cooled to room temperature, this was taken as an indication that Stage 1 of the polyesterification process was complete.

Acid value (AV) and viscosity were measured. Depending on the measured AV and the theoretical target AV (< 12mg KOH/g), a calculated quantity of NPG or TPA (the "NPG/TPA correction") was added to the reactor. The temperature was cooled down up to 210°C and AA (54g) was also charged, along with antifoam (1g). The batch was heated to ensure distillation continues and when necessary, the column was removed. When distillation stops, a sample was taken to check AV (26 - 28.5 mg KOH/g) and viscosity (5.5 - 6.5 Pa·s) and if necessary an NPG/AA correction was added.

Once the AV and viscosity have the suitable value, temperature was cooled down up to 180°C and TMA (108g) and antifoam (1g) were added to the reaction vessel, stirring the mixture for 1h. Then, vacuum was applied and batch temperature was maintained at 180°C. The batch was sampled regularly to check AV and viscosity. When the target AV (70 - 80 mg KOH/g) and viscosity (9.0 - 20.0 Pa.s) were reached, TNPP (2.8g) and EtTPPBr (18.5g) were added to the reaction vessel, stirred for additional 1h, emptied over an aluminum dish and allowed to cool to room temperature. The final AV of the polyester was 72.4 mg KOH/g and the melt viscosity measured at 165°C was 11.24 Pa s. This material was called resin 1.

Example 2: Polyester composition without acid-reactive component (comparative)

DEG (268g), PG (222g), TNPP (1.4g) and esterification catalyst (1.4g) were charged to a 6L glass reaction vessel, equipped with stirrer, packed column with top thermocouple, condenser, distillate collection vessel, nitrogen sparge, vacuum line and thermocouple. The vessel was heated via an electric mantle until the contents were molten and mobile (around 130°C). TPA (755g) was added to the vessel, nitrogen blanket was applied and the contents were stirred vigorously. The vessel was continuously heated to keep a column top temperature under 100°C indicating continuous distillation of reaction water and no glycol loss. During the distillation process, the batch temperature was progressively increased and allowed to rise to 230°C, keeping the top thermocouple under 100°C. The batch contents were regularly sampled, cooled and visually checked for clarity. When batch contents were clear when cooled to room temperature and the AV was about <15mg KOH/g, this was taken as an indication that Stage 1 of the polyesterification process was complete.

Once the AV and viscosity have the suitable value, temperature was cooled down up to 180°C and TMA (253g) was charged to the reaction vessel, stirring the mixture for 1h. Then, vacuum was applied and batch temperature was maintained at 180°C. The batch was sampled regularly to check AV and viscosity. When the target AV (80 - 100 mg KOH/g ) and viscosity (5.0 - 20.0 Pa s) were reached, the vessel was emptied over an aluminum dish and allowed to cool to room temperature. The final AV of the polyester was 100.7 mg KOH/g and the melt viscosity measured at 165°C was 5.16 Pa s. This material was called resin 2.

Example 3: Polyester composition without acid-reactive component (comparative)

NPG (100%, 548g), TNPP (1g) and esterification catalyst (2g) were charged to a 6L glass reaction vessel, equipped with stirrer, packed column with top thermocouple, condenser, distillate collection vessel, nitrogen sparge, vacuum line and thermocouple. The vessel was heated via an electric mantle until the contents were molten and mobile. TPA (811g) was added to the vessel, nitrogen blanket was applied and the contents stirred vigorously. The vessel was

continuously heated to keep a column top temperature of around 99°C indicating continuous distillation of reaction water. During the distillation process, the batch temperature was progressively increased and allowed to rise to 235°C. The batch contents were regularly sampled, cooled and visually checked for clarity. When batch contents were clear when cooled to room temperature, this was taken as an indication that Stage 1 of the polyesterification process was complete.

Then, the temperature was cooled down up to 200°C and AA (30g) was also charged, along with antifoam. The vessel was heated up to 210°C and was stirred for 30 minutes.

After that, temperature was cooled down up to 180°C and TMA (100g) was added to the reaction vessel and the mixture was continuously stirred. Then, slight vacuum was applied keeping the batch temperature at 180°C. When the target AV (60 - 70 mg KOH/g) and viscosity (10.0 - 25.0 Pa.s) were reached, TNPP (6g) and TriEHA (3g) were loaded to the reaction vessel, stirred for additional 30 - 45 minutes, emptied over an aluminum dish and allowed to cool to room temperature. The final AV of the polyester was 74.7 mg KOH/g and the melt viscosity measured at 165°C was 11.82 Pa s. This material was called resin 3.

Example 4: Polyester composition without acid-reactive component (comparative)

NPG (100%, 500g), EG (69g), TNPP (6g) and esterification catalyst (1g) were charged to a 10L glass reaction vessel, equipped with stirrer, packed column with top thermocouple, condenser, distillate collection vessel, nitrogen sparge, vacuum line and thermocouple. The vessel was heated via an electric mantle until the contents were molten and mobile. TPA (739g) was added to the vessel, nitrogen blanket was then applied and the contents were stirred vigorously. The vessel was continuously heated to keep a column top temperature at 99°C indicating continuous distillation of reaction water. During the distillation process, the batch temperature was progressively increased and allowed to rise to 240°C. The batch contents were regularly sampled, cooled and visually inspected for clarity. When batch contents were clear when cooled to room temperature, this was taken as an indication that Stage 1 of the polyesterification process was complete.

Then, the temperature was cooled down up to 220°C and IPA (61g) was also charged. The vessel was stirred until a complete homogenization was observed. After that, the temperature was cooled down up to 200°C and AA (26g) was added, along with antifoam. The vessel was heated at 200 - 210°C and stirred for 30 minutes.

Then, temperature was cooled down up to 180°C and TMA (97g) was added to the reaction vessel and the mixture was continuously stirred. Then, slight vacuum was applied keeping the batch temperature at 180°C. When the target AV (70 - 85 mg KOH/g ) and viscosity (9.0 - 25.0 Pa·s) were reached, TNPP (1.3g) was loaded to the reaction vessel, stirred for additional 1 hour, emptied over an aluminum dish and allowed to cool to room temperature. The final AV of the polyester was 63.6 mg KOH/g and the melt viscosity measured at 165°C was 14.97 Pa s. This material was called resin 4.

Example 5: Polyester composition with acid-reactive component (invention)

The resin was prepared as described in Example 1 except that after the Stage 3, the temperature was cooled down to 168°C, MEA (3.8g) was added and the vessel was stirred at this temperature for 30 minutes. Then, the resin was emptied over an aluminum dish and allowed to cool to room temperature. The final AV of the polyester was 69.1 mg KOH/g and the melt viscosity measured at 165°C was 9.26 Pa s. This material was called resin 5.

Example 6: Polyester composition with acid-reactive component (invention)

The resin was prepared as described in Example 1 except that after the Stage 3, the temperature was cooled down to 168°C, DEA (3.8g) was added and the vessel was stirred at this temperature for 30 minutes. Then, the resin was emptied over an aluminum dish and allowed to cool to room temperature. The final AV of the polyester was 68.0 mg KOH/g and the melt viscosity measured at 165°C was 23.39 Pa s. This material was called resin 6.

Example 7: Polyester composition with acid-reactive component (invention)

The resin was prepared as described in Example 1 except that after the Stage 3, the temperature was cooled down to 168°C, TIPA (8g) was added and the vessel was stirred at this temperature for 30 minutes. Then, the resin was emptied over an aluminum dish and allowed to cool to room temperature. The final AV of the polyester was 69.4 mg KOH/g and the melt viscosity measured at 165°C was 17.08 Pa s. This material was called resin 7.

Example 8: Polyester composition with acid-reactive component (invention)

The resin was prepared as described in Example 1 except that after the Stage 3, the temperature was cooled

down to 168°C, DBEA (8g) was added and the vessel was stirred at this temperature for 30 minutes. Then, the resin was emptied over an aluminum dish and allowed to cool to room temperature. The final AV of the polyester was 71.8 mg KOH/g and the melt viscosity measured at 165°C was 13.58 Pa s. This material was called resin 8.

Example 9: Polyester composition with acid-reactive component (invention)

The resin was prepared as described in Example 1 except that after the Stage 3, the temperature was cooled down to 168°C, TETA (3.8g) was added and the vessel was stirred at this temperature for 30 minutes. Then, the resin was emptied over an aluminum dish and allowed to cool to room temperature. The final AV of the polyester was 70.0 mg KOH/g and the melt viscosity measured at 165°C was 14.94 Pa s. This material was called resin 9.

Example 10: Polyester composition with acid-reactive component (invention)

The resin was prepared as described in Example 1 except that after the Stage 3, the temperature was cooled down to 168°C, IPDA (8g) was added and the vessel was stirred at this temperature for 30 minutes. Then, the resin was emptied over an aluminum dish and allowed to cool to room temperature. The final AV of the polyester was 68.7 mg KOH/g and the melt viscosity measured at 165°C was 15.43 Pa s. This material was called resin 10.

Example 11: Polyester composition with acid-reactive component (invention)

The resin was prepared as described in Example 1 except that after the Stage 3, the temperature was cooled down to 168°C, (L)-Ser (3.8g) was added and the vessel was stirred at this temperature for 30 minutes. Then, the resin was emptied over an aluminum dish and allowed to cool to room temperature. The final AV of the polyester was 75.5 mg KOH/g and the melt viscosity measured at 165°C was 11.55 Pa s. This material was called resin 11.

Example 12: Polyester composition with acid-reactive component (invention)

The resin was prepared as described in Example 1 except that after the Stage 3, the temperature was cooled down to 168°C, Gly (8.5g) was added and the vessel was stirred at this temperature for 30 minutes. Then, the resin was emptied over an aluminum dish and allowed to cool to room temperature. The final AV of the polyester was 72.9 mg KOH/g and the melt viscosity measured at 165°C was 10.46 Pa s. This material was called resin 12.

Example 13: Polyester composition with acid-reactive component (invention)

The resin was prepared as described in Example 2 except that after the Stage 3, the temperature was cooled down to 168°C, MEA (8g) was added and the vessel was stirred at this temperature for 30 minutes. Then, the resin was emptied over an aluminum dish and allowed to cool to room temperature. The final AV of the polyester was 88.5 mg KOH/g and the melt viscosity measured at 165°C was 53.6 Pa s. This material was called resin 13.

Example 14: Polyester composition with acid-reactive component (invention)

The resin was prepared as described in Example 4 except that after the Stage 3, the temperature was cooled down to 168°C, MEA (3.8g) was added and the vessel was stirred at this temperature for 30 minutes. Then, the resin was emptied over an aluminum dish and allowed to cool to room temperature. The final AV of the polyester was 73.8 mg KOH/g and the melt viscosity measured at 165°C was 12.29 Pa s. This material was called resin 14.

Example 15: Polyester composition with acid-reactive component (invention)

The resin was prepared as described in Example 3 except that after the Stage 3, the temperature was cooled down to 168°C, MEA (8g) was added and the vessel was stirred at this temperature for 30 minutes. Then, the resin was emptied over an aluminum dish and allowed to cool to room temperature. The final AV of the polyester was 57.6 mg KOH/g and the melt viscosity measured at 165°C was 12.96 Pa s. This material was called resin 15.

Example 16: Polyester composition with acid-reactive component (invention)

The resin was prepared as described in Example 1 except that after the Stage 3, the temperature was cooled down to 168°C, MEA (33.6g) was added and the vessel was stirred at this temperature for 30 minutes. Then, the resin was emptied over an aluminium dish and allowed to cool to room temperature. The final AV of the polyester was 54.1

mg KOH/g and the melt viscosity measured at 165°C was 4.08 Pa s. This material was called resin 16.

Example 17: Compounding, extrusion and application

The polyester compositions of Examples 1-16 were formulated into powder coating compositions by mixing with epoxy functional crosslinker (Araldite GT-7004) or a β-hydroxyalkylamide crosslinker (PRIMID XL-552) in a weight ratio polyester/ Araldite GT-7004 of 50/50 or in a weight ratio polyester/HAA of 90/10 along with pigments, surface additive (BYK 360P) and degassing agent (Benzoin) according to the formulations described below and summarized in **Table 2.**

In **Table 2** are only shown resins 1-4, indicating that the rest of the polyesters (5-16) were formulated following the same recipe, depending on the cross-linker that was used in each case.

The components were premixed in a high speed Thermoprism Pilot Mixer 3 premixer at 1500 rpm for 20 seconds before being extruded as shown in **Table 2.**

The extruder speed was 230 rpm and the four extruder barrel zone temperatures were set at 25, 35, 85 and 100-130°C (extruder conditions shown in **Table 3**).

Following extrusion, coatings were ground using a Kemutec laboratory classifying microniser.

The classifier was set at 10 rpm, the rotor was set at 8 rpm and the feed was set at 5.2 rpm. The coatings were milled and sieved to 100μm using Russel Finex 100micron mesh Demi Finex laboratory vibrating sieves.

The coated panels were then cured in a fan assisted oven using **Table 4** conditions to yield films with the properties also shown in **Table 4.** The final mixed products have a gel time of about 3.5 - 6.0 minutes at 140°C.

For evaluating the powder coating quality, the obtained powders were electrostatically applied onto panels using a Nordson Surecoat corona spray gun. For appearance assessment, coatings were applied onto 100mm × 300mm aluminum panels. For weathering tests, coatings were applied onto 100mm × 150mm aluminum panels. For mechanical tests, coatings were applied onto 100mm × 150mm pretreated steel panels. The coated panels were then cured in a fan assisted oven. The coatings that were cross-linked with the epoxy crosslinker (Araldite GT-7004) were cured at 140°C for 20 minutes and the coatings cross-linked with β-hydroxyalkylamide crosslinker (PRIMID XL-552) were cured at 180°C for 15 minutes to yield films with the properties shown in **Table 4.** The cured film thickness was 60-80 μm. The samples were cooled by ambient conditions and the appearance, weathering and mechanical tests were done between 24 and 36 hours after curing. The final mixed products have a gel time of about 3.5 - 6.0 minutes at 140°C.

Example 18: Results and powder coatings evaluation

In **Table 1,** Resins 1-16 obtained in Examples 1-16 were analyzed using the above described methods to determine the acid value (AV), viscosity, glass transition temperature (Tg), Mw, Mn, polydispersity (D), the amount of branching polyacid before reaction with the acid-reactive component ($x_1$), the amount of branching polyacid after reaction with the acid-reactive component ($x_2$) and the theoretical nitrogen content.

**Table 1:** Properties of polyester compositions of Examples 1-16

| Resin | AV (mg KOH/g) | Viscosity at 165°C (Pa·s) | Tg (°C) | Mw | Mn | D | N conten t (%) | $x_1$ (wt%) | $x_2$ (wt%) |
|---|---|---|---|---|---|---|---|---|---|
| 1 (comp) | 72.4 | 11.24 | 60.6 | 6950 | 3047 | 2.28 | - | 2.12 | N.A. |
| 2 (comp) | 100.7 | 5.16 | 56.4 | 8714 | 2713 | 3.21 | - | 4.04 | N.A. |
| 3 (comp) | 74.7 | 11.82 | 62.1 | 6334 | 2851 | 2.22 | 0.015 | 2.64 | N.A. |
| 4 (comp) | 63.6 | 14.97 | 64.7 | 7190 | 3250 | 2.21 | - | 1.02 | N.A. |
| 5 | 69.1 | 9.26 | 61.8 | 7227 | 2534 | 2.85 | 0.06 | 2.84 | 0.86 |
| 6 | 68.0 | 23.39 | 63.9 | 11507 | 3299 | 3.49 | 0.034 | 2.78 | 0.89 |
| 7 | 69.4 | 17.08 | 62.2 | 11113 | 2868 | 3.88 | 0.039 | 1.64 | 0.92 |
| 8 | 71.8 | 13.58 | 63.4 | 9061 | 2691 | 3.37 | 0.043 | 1.29 | 0.82 |
| 9 | 70.0 | 14.94 | 62.4 | 8245 | 2796 | 2.95 | 0.097 | 2.58 | 1.00 |

(continued)

| Resin | AV (mg KOH/g) | Viscosity at 165°C (Pa·s) | Tg (°C) | Mw | Mn | D | N content (%) | $x_1$ (wt%) | $x_2$ (wt%) |
|---|---|---|---|---|---|---|---|---|---|
| **10** | 68.7 | 15.43 | 63.4 | 8350 | 2743 | 3.04 | 0.088 | 2.24 | 1.02 |
| **11** | 75.5 | 11.55 | 61.7 | 7954 | 2530 | 3.14 | 0.034 | 1.36 | 0.83 |
| **12** | 72.9 | 10.46 | 60.7 | 7173 | 2573 | 2.79 | 0.11 | 1.27 | 0.32 |
| **13** | 88.5 | 53.6 | 57.9 | 8086 | 2586 | 3.13 | 0.12 | 3.94 | 2.32 |
| **14** | 73.8 | 12.29 | 63.6 | 6120 | 2722 | 2.25 | 0.073 | 2.01 | 1.43 |
| **15** | 57.6 | 12.96 | 63.4 | 6335 | 2923 | 2.17 | 0.12 | 1.11 | 0.34 |
| **16** | 54.1 | 4.08 | 52.2 | 5329 | 2493 | 2.14 | 0.51 | 1.94 | <0.03 |

**Table 2:** Formulation of coating compositions

| | **Formulation F1 with epoxy crosslinker (parts by weight)** | **Formulation F2 with β-hydroxyalkylamide crosslinker (parts by weight)** |
|---|---|---|
| **Polyester composition** | 360 | 648 |
| **Araldite GT-7004** | 360 | |
| **Primid XL-552** | | 72 |
| **Benzoin** | 5 | 5 |
| **BYK 360-P** | 10 | 10 |
| **TiO2 (Kronos 2160)** | 265 | 265 |

**Table 3:** Extrusion conditions for the preparation of the coating compositions

| | | |
|---|---|---|
| **Extruder** | ZSK-26 | |
| **Number of passes** | 1 | |
| **Temperature (°C)** | 30-100 (Formulation F1) | 30-130 (Formulation F2) |
| **Barrel Speed (rpm)** | 230 | |

**Table 4**: Properties of coatings

| | A | B | C | D | E | F |
|---|---|---|---|---|---|---|
| **Polyester composition** | **Resin 1** | **Resin 2** | **Resin 3** | **Resin 4** | **Resin 5** | **Resin 6** |
| **Formulation** | **F1** | **F1** | **F2** | **F2** | **F1** | **F1** |
| **Flow (mm)** | (140ºC) 27 | (140ºC) 11 | (180ºC) 13 | (180ºC) 26 | (140ºC) 25 | (140ºC) 24 |
| **Gel Time (140ºC) (s)** | 280 | 273 | 210 | 200 | 225 | 275 |
| **Curing Conditions (Object T)** | 20' at 140ºC | 20' at 140ºC | 15' at 180ºC | 15' at 180ºC | 20' at 140ºC | 20' at 140ºC |
| **Thickness (µm)** | 75 | 80 | 69 | 78 | 73 | 79 |
| **Visual flow (PCI)** | 4 | 6 | 6 | 5 | 4 | 4 |
| **Impact direct/Reverse (Kg·cm)** | 200/200 | 200/200 | 200/200 | 200/200 | 200/200 | 200/200 |
| **Penetration** | > 7 | > 7 | >7 | >7 | >7 | >7 |
| **Adhesion (GT-val: 0-Excel, 5-bad)** | GT0 | GT0 | GT0 | GT0 | GT0 | GT0 |
| **Conical mandrel (%)** | 100 | 100 | 100 | 100 | 100 | 100 |
| **MEK resistence (double rubs)** | > 200 | > 200 | > 200 | > 200 | > 200 | > 200 |
| **T bend** | 0 T | 1 T | 1/2 T | 1/2 T | 0 T | 0 T |
| **GLOSS 20º (%)** | 93,8 | 91,9 | 55,6 | 82,3 | 96 | 91 |
| **GLOSS 60º (%)** | 102 | 102 | 94,5 | 98,3 | 101 | 103 |
| **GLOSS 85º (%)** | 99,2 | 99,5 | 95,3 | 98,5 | 100 | 99,2 |
| **L* (value)** | 94,95 | 95,25 | 94,14 | 94,54 | 95,31 | 94,85 |
| **a* (value)** | -1,41 | -1,47 | -1,24 | -1,27 | -1,48 | -1,5 |
| **b* (value)** | 1,63 | 1,32 | 5,07 | 5,14 | 1,43 | 2,06 |
| **DOI** | 45,7 | 45,9 | 17,8 | 38,9 | 45,3 | 44,8 |
| **HAZE (Log.)** | 180 | 174 | 400 | 204 | 121,3 | 218 |

**Table 4 (continued)**: Properties of coatings

| **Formulation** | **G** | **H** | **I** | **J** | **K** | **L** |
|---|---|---|---|---|---|---|
| **Polyester composition** | **Resin 7** | **Resin 8** | **Resin 9** | **Resin 10** | **Resin 11** | **Resin 12** |
| **Formulation** | **F1** | **F1** | **F1** | **F1** | **F1** | **F1** |
| **Flow (mm)** | (140ºC) 35 | (140ºC) 28 | (140ºC) 29 | (140ºC) 18 | (140ºC) 13 | (140ºC) 31 |
| **Gel Time (140ºC) (s)** | 265 | 260 | 335 | 315 | 277 | 285 |
| **Curing Conditions (Object T)** | 20' at 140ºC | 20' at 140ºC | 20' at 140ºC | 20' at 140ºC | 20' at 140ºC | 20' at 140ºC |
| **Thickness (µm)** | 82 | 76 | 75 | 76 | 75 | 82 |
| **Visual flow (PCI)** | 4 | 4 | 4 | 4 | 6 | 4 |
| **Impact direct/Reverse (Kg·cm)** | 200/200 | 200/200 | 200/200 | 200/200 | 200/140 | 200/180 |
| **Penetration** | >7 | >7 | >7 | >7 | >7 | >7 |
| **Adhesion (GT-val: 0-Excel, 5-bad)** | GT0 | GT0 | GT0 | GT0 | GT0 | GT0 |
| **Conical mandrel (%)** | 100 | 100 | 100 | 100 | 100 | 100 |
| **MEK resistence (double rubs)** | > 200 | > 200 | > 200 | > 200 | > 200 | > 200 |
| **T bend** | 0 T | 0 T | 0 T | 0 T | 0 T | 0 T |
| **GLOSS 20º (%)** | 91,8 | 92,5 | 90,3 | 94 | 96 | 95,7 |
| **GLOSS 60º (%)** | 101 | 101 | 102 | 102 | 101 | 101 |
| **GLOSS 85º (%)** | 99,5 | 99,3 | 98,9 | 99,1 | 98,3 | 99,5 |
| **L* (value)** | 95,45 | 95,22 | 94,41 | 94,8 | 94,55 | 95,43 |
| **a* (value)** | -1,52 | -1,7 | -1,18 | -1,45 | -1,22 | -1,54 |
| **b* (value)** | 2,02 | 2,63 | 3,36 | 1,9 | 3,12 | 2,07 |
| **DOI** | 48,1 | 48,1 | 50,8 | 55,8 | 43,3 | 62 |
| **HAZE (Log.)** | 145 | 145 | 185 | 176 | 142 | 125 |

**Table 4 (continued)**: Properties of coatings

| Formulation | M | N | O | P |
|---|---|---|---|---|
| Polyester composition | Resin 13 | Resin 14 | Resin 15 | Resin 16 |
| Formulation | F1 | F2 | F2 | F1 |
| Flow (mm) | (140ºC) 10 | (180ºC) 19 | (180ºC) 40 | (140ºC) 24 |
| Gel Time (140ºC) (s) | 270 | 232 | 240 | 590 |
| Curing Conditions (Object T) | 20' at 140ºC | 15' at 180ºC | 15' at 180ºC | 20' at 140ºC |
| Thickness (µm) | 69 | 74 | 71 | 78 |
| Visual flow (PCI) | 6 | 6 | 5 | 7 |
| Impact direct/Reverse (Kg·cm) | 130/80 | 200/200 | 200/200 | 10/0 |
| Penetration | >7 | >7 | >7 | 1 |
| Adhesion (GT-val: 0-Excel, 5-bad) | GT0 | GT0 | GT0 | GT4 |
| Conical mandrel (%) | 95 | 100 | 100 | 0 |
| MEK resistence (double rubs) | >200 | > 200 | > 200 | 15 |
| T bend | 1 T | 1/2 T | 0T | >2.5T |
| GLOSS 20º (%) | 96,8 | 74,3 | 89 | 99,6 |
| GLOSS 60º (%) | 102 | 97,5 | 98,7 | 102,0 |
| GLOSS 85º (%) | 99,9 | 97,7 | 98,5 | 98,5 |
| L* (value) | 95,15 | 94,03 | 94,58 | 95,19 |
| a* (value) | -1,56 | -1,35 | -1,46 | -1,62 |
| b* (value) | 1,3 | 4,64 | 4,04 | 2,32 |
| DOI | 59 | 43,4 | 65,4 | 72 |
| HAZE (Log.) | 134 | 256 | 134 | 105 |

Conclusions

The main goal of the present invention is the total or partial abatement of residual branching polyacid content (in particular residual trimellitic acid and trimellitic anhydride content) in saturated polyester resins without impairing the reactivity and final characteristics of the coating.

As expected, polyester compositions according to the invention (Resins 5-16) clearly show a reduced content of branching polyacid component compared to that of comparative polyester compositions (Resins 1-4). The extent of the branching polyacid content reduction depends on the quantity and the type of acid-reactive component used in each case. When monoethanolamine is used as the acid-reactive component, both mechanical and chemical properties were

excellent, as well as gloss and flow. Furthermore, other properties of the coatings were unexpectedly improved as better distinctness-of-image (DOI) and lower haze. As a consequence, the quality of the coating's overall appearance increased, reducing common textured imperfections normally found in these coatings, such as orange peel.

Even though the acid-reactive component reacts directly with the residual branching polyacid component forming amides or cyclic amides, experimental results do not show a loss of reactivity that could be expected due to a reduction in the number of carboxyl-functional groups that could react later on with the crosslinking component. In fact, the reactivity of the resins that have been treated with an acid-reactive component show the same reactivity or even better reactivity compared to that of the untreated resin. Without willing to be bound by theory, it is believed that the additive formed by reacting at least part of the residual branching polyacid component with the acid-reactive component may act as a dispersant, improving the levelling and minimizing the haze of the resulting coating.

## Claims

**1.** A polyester composition obtained by reacting:

a) a hydroxyl-functionalized polyester component;
b) a branching polyacid component having an acid functionality of at least 3; and
c) an acid-reactive component.

**2.** The polyester composition according to claim 1, wherein the polyester composition comprises a branched carboxyl-functionalized polyester, an additive component and optionally a residual amount of component b), wherein the additive component corresponds to the reaction product of at least part of component b) with component c).

**3.** The polyester composition according to claim 1 or claim 2, wherein the polyester composition further comprises one or more additives selected from catalysts, antioxidants, stabilizers, electrostatic additives, and combinations thereof.

**4.** The polyester composition according to any one of claims 1 to 3, wherein the polyester composition is obtained with the following steps:

i) forming component a);
ii) forming a carboxyl-functionalized polyester component P by reacting components a) and b) such that component P contains an amount $x_1$ of residual component b);
iii) forming an additive component A by reacting at least part of residual component b) of component P with component c) such that the polyester composition contains an amount $x_2$ of residual component b) that is less than $x_1$;
iv) optionally adding one or more additives selected from catalysts, antioxidants, stabilizers, electrostatic additives, and combinations thereof.

**5.** The polyester composition according to claim 4, wherein:

- $x_1$ is from 0.8% to 5%, preferably from 0.9% to 4.5%, more preferably from 1% to 4%, by weight based on the weight of component P;
- $x_2$ is less than 2.5%, preferably less than 1%, more preferably less than 0.1%, by weight based on the weight of the polyester composition; and
- the ratio $\frac{x_1 - x_2}{x_1}$ is at least 0.2, preferably at least 0.4, more preferably at least 0.6.

**6.** The polyester composition according to any one of claims 1 to 5, wherein component a) is based on:

a1) a polyol component comprising a11) a diol component; and optionally a12) a branching polyol component having a hydroxyl functionality of at least 3; and a2) a polyacid component comprising a21) a diacid component; and optionally a22) a branching polyacid component having an acid functionality of at least 3.

**7.** The polyester composition according to any one of claims 1 to 6, wherein the amount of component a) is from 80 to 98%, in particular from 85 to 97%, more particularly from 90 to 95%, by weight based on the total weight of components a) + b) + c).

**8.** The polyester composition according to any one of claims 1 to 7, wherein component b) comprises at least one branching polyacid selected from the group consisting of trimellitic acid, pyromellitic acid, hemimellitic acid, mellitic acid, derivatives thereof and mixtures thereof, preferably trimellitic anhydride.

**9.** The polyester composition according to any one of claims 1 to 8, wherein the amount of component b) is from 1 to 20%, in particular from 2 to 10%, more particularly from 5 to 8%, by weight based on the total weight of components a) + b) + c).

**10.** The polyester composition according to any one of claims 1 to 9, wherein component c) comprises at least one compound selected from an amino-alcohol, an amine, a polyamine, an amino-acid, a polyol and combinations thereof, preferably at least one compound selected from an amino-alcohol, an amine, a polyamine, an amino-acid and combinations thereof, more preferably at least one compound selected from monoethanolamine, triisopropanolamine, dibutylethanolamine, triethylenetetramine, isophoronediamine, glycine, serine and combinations thereof.

**11.** The polyester composition according to any one of claims 1 to 10, wherein the amount of component c) is from 0.1 to 3%, in particular from 0.15 to 2.8%, more particularly from 0.2 to 2.0%, by weight based on the total weight of components a) + b) + c).

**12.** Use of the polyester composition according to any one of claims 1 to 11, in a coating composition, preferably in a powder coating composition, more preferably in a crosslinkable powder coating composition.

**13.** A coating composition comprising

- the polyester composition according to any one of claims 1 to 11;
- a crosslinker component;
- optionally a catalyst;
- optionally one or more additives.

**14.** The coating composition according to claim 13, wherein the crosslinking component comprises at least one epoxy resin, in particular at least one epoxy resin selected from a glycidyl ether resin or triglycidylisocyanurate, more particularly a glycidyl ether resin based on bisphenol A or bisphenol F.

**15.** The coating composition according to claim 13, wherein the crosslinking component comprises a β-hydroxyalkylamide, in particular N,N,N',N'-tetrakis(2-hydroxyethyl)adipamide or N,N,N',N'-tetrakis(2-hydroxypropyl)adipamide.

**16.** A coating obtained by curing the coating composition according to any one of claims 13 to 15.

**17.** The coating according to claim 16, wherein the curing is conducted by heating the coating composition at a temperature of from 120 to 200°C, in particular from 125 to 195°C, more particularly from 130 to 190°C, even more particularly from 135 to 185°C, more particularly still from 140 to 180°C.

**18.** A substrate fully or partially coated with the coating according to claim 16 or 17.

**19.** The substrate according to claim 18, wherein the substrate is a heat-sensitive substrate.

**20.** A process for coating a substrate comprising the following steps:

- applying the coating composition according to any one of claims 13 to 15 on at least part of a surface of a substrate; and
- curing the coating composition.

**21.** Use of an acid-reactive component to reduce the amount of residual branching polyacid component having an acid functionality of at least 3 in a carboxyl-functionalized polyester component obtained by reacting a hydroxyl-functionalized polyester component and a branching polyacid component having an acid functionality of at least 3.

Europäisches Patentamt
European Patent Office
Office européen des brevets

# EUROPEAN SEARCH REPORT

Application Number
EP 23 38 2391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 9 487 619 B2 (EASTMAN CHEM CO [US]) 8 November 2016 (2016-11-08)<br>* examples 1,4 *<br>* claims 4-5 *<br>* examples 7-8 *<br>* claims 1-52 * | 1-20<br>21 | INV.<br>C08G63/20<br>C08G63/60<br>C08G63/685<br>C08G63/91<br>C09D167/00<br>C09D167/02 |
| A | US 2006/009591 A1 (WU BIN [US]) 12 January 2006 (2006-01-12)<br>* examples A-G *<br>* claims 1-17 * | 1-21 | |
| A | US 5 306 567 A (KUO THAUMING [US] ET AL) 26 April 1994 (1994-04-26)<br>* claims 1-11 *<br>* examples 1-3 * | 1-21 | |
| A | US 4 147 737 A (SEIN ANTON J ET AL) 3 April 1979 (1979-04-03)<br>* examples I-XVII *<br>* claims 1-28 * | 1-21 | |
| | | | TECHNICAL FIELDS SEARCHED (IPC) |
| | | | C09J<br>C08G<br>C09D |

The present search report has been drawn up for all claims

1

| Place of search | Date of completion of the search | Examiner |
|---|---|---|
| The Hague | 13 October 2023 | Popescu, Teodora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 38 2391

This annex lists the patent family members relating to the patent documents cited in the above-mentioned European search report. The members are as contained in the European Patent Office EDP file on
The European Patent Office is in no way liable for these particulars which are merely given for the purpose of information.

13-10-2023

| Patent document cited in search report | | Publication date | Patent family member(s) | | | Publication date |
|---|---|---|---|---|---|---|
| US 9487619 | B2 | 08-11-2016 | NONE | | | |
| US 2006009591 | A1 | 12-01-2006 | AU | 2003282055 | A1 | 07-06-2004 |
| | | | CA | 2504712 | A1 | 21-05-2004 |
| | | | CN | 1705697 | A | 07-12-2005 |
| | | | EP | 1560868 | A1 | 10-08-2005 |
| | | | JP | 2006504832 | A | 09-02-2006 |
| | | | TW | 200422360 | A | 01-11-2004 |
| | | | US | 2004087736 | A1 | 06-05-2004 |
| | | | US | 2006009591 | A1 | 12-01-2006 |
| | | | WO | 2004041904 | A1 | 21-05-2004 |
| US 5306567 | A | 26-04-1994 | CA | 2148488 | A1 | 09-06-1994 |
| | | | EP | 0670857 | A1 | 13-09-1995 |
| | | | JP | H08503984 | A | 30-04-1996 |
| | | | KR | 950704395 | A | 20-11-1995 |
| | | | US | 5306567 | A | 26-04-1994 |
| | | | US | 5350830 | A | 27-09-1994 |
| | | | US | 5358789 | A | 25-10-1994 |
| | | | WO | 9412557 | A1 | 09-06-1994 |
| US 4147737 | A | 03-04-1979 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4065438 A
- US 4147737 A
- EP 1054917 A
- US 2971011 A